# EUROPÄISCHE PATENTANMELDUNG

(11) **EP 0 974 769 A2**
(43) Veröffentlichungstag der Anmeldung: **26.01.2000**
(21) Anmeldenummer: 99890221.7
(22) Anmeldetag: 02.07.1999
(51) Int. Cl.: F16F 9/49

(54) **Vorrichtung zum Abbremsen eines Kolbens eines Hydraulikzylinders**

(30) Priorität: 22.07.1998 AT 125998
(71) Anmelder: Hainzl Industriesysteme Gesellschaft m.b.H., A-4040 Linz (AT)
(72) Erfinder: Zajicek, Ernst, Ing., 4100 Ottensheim (AT)
(74) Vertreter: Hübscher, Helmut, Dipl.-Ing.

(57) **Zusammenfassung**

Es wird eine Vorrichtung zum Abbremsen eines Kolbens (5) eines Hydraulikzylinders in seiner Endlage beschrieben, der aus einer zur Kolbenstange (4) koaxialen, den Druckraum zwischen dem Kolben (5) und dem Boden (3) bzw. dem Kopf (2) des Zylinders mit einer Zu- und Ableitung (6) für das Hydraulikmittel verbindenden, zylindrischen Durchtrittsöffnung (8) im Kopf (2) bzw. Boden (3) des Zylinders und aus einem der Kolbenstange (4) zugeordneten, zylindrischen Dämpfungskörper (9) besteht, der in der anschlagbegrenzten Endlage des Kolbens (5) in einer dem Bremsweg entsprechenden Länge in die Durchtrittsöffnung (8) im Kopf (2) bzw. Boden (3) des Zylinders eingreift und eine in Anschlagrichtung abfallende Abflachung (13) aufweist, die mit der Durchtrittsöffnung (8) einen sich entgegen der Anschlagrichtung verjüngenden Dämpfungsspalt bildet. Um vorteilhafte Konstruktionsbedingungen zu schaffen, wird vorgeschlagen, daß sich die Abflachung (13) lediglich über einen Teil der Eingriffslänge des Dämpfungskörpers (9) erstreckt und daß zwischen dem an den Boden (3) bzw. den Kopf (2) des Zylinders anschließenden Druckraum (7) und der zugehörigen Zu- und Ableitung (6) für das Hydraulikmittel in an sich bekannter Weise eine mit einem einstellbaren Drosselventil (11) versehene Umgehungsleitung (10) vorgesehen ist.

## Beschreibung

Die Erfindung bezieht sich auf eine Vorrichtung zum Abbremsen eines Kolbens eines Hydraulikzylinders in seiner Endlage, bestehend aus einer zur Kolbenstange koaxialen, den Druckraum zwischen dem Kolben und dem Boden bzw. dem Kopf des Zylinders mit einer Zu- und Ablaufleitung für das Hydraulikmittel verbindenden, zylindrischen Durchtrittsöffnung im Kopf bzw. Boden des Zylinders und aus einem der Kolbenstange zugeordneten, zylindrischen Dämpfungskörper, der in der anschlagbegrenzten Endlage des Kolbens in einer dem Bremsweg entsprechenden Länge in die Durchtrittsöffnung im Kopf bzw. Boden des Zylinders eingreift und eine in Anschlagrichtung abfallende Abflachung aufweist, die mit der Durchtrittsöffnung einen sich entgegen der Anschlagrichtung verjüngenden Dämpfungsspalt bildet.

Beim Anschlagen eines Kolbens an den Kopf bzw. den Boden eines Hydraulikzylinders muß die kinetische Energie des Kolbens über die Formänderungsarbeit der beteiligten Konstruktionsteile aufgenommen werden, wobei diese Konstruktionsteile ausschließlich im elastischen Bereich beansprucht werden dürfen. Aus diesem Grunde muß der Kolben bei höheren Kolbengeschwindigkeiten oder größeren bewegten Massen im Endlagenbereich hydraulisch abgebremst werden. Zu diesem Zweck wird der Kolbenstange ein Dämpfungskörper zugeordnet, der im Endlagenbereich des Kolbens in eine koaxiale Durchtrittsöffnung für das Hydraulikmittel im Boden bzw. im Kopf des Zylinders eingreift und damit den Abfluß des Hydraulikmittels aus dem anschlagseitigen Druckraum zwischen dem Kolben und dem Boden bzw. dem Kopf des Zylinders sperrt, so daß das Hydraulikmittel gezwungen wird, seinen Weg über eine zwischen diesem Druckraum und einer Ableitung im Boden bzw. im Kopf des Zylinders vorgesehene Umgehungsleitung zu nehmen, in der ein Drosselventil angeordnet ist. Über die Drosselung des Abflusses des Hydraulikmittels wird der Kolben vor dem Endanschlag entsprechend abgebremst, wobei durch die Einstellung der Drosselventils eine von den Massenkräften abhängige Anpassung der Bremswirkung auf den Kolben möglich ist. Nachteilig bei diesen bekannten Vorrichtungen zum Abbremsen des Kolbens im Endlagenbereich ist allerdings, daß im anschlagseitigen Druckraum nur allmählich abklingende Druckschwingungen mit hohen Druckspitzen auftreten. Solche Druckschwingungen können weitgehend vermieden werden, wenn nicht eine über den Bremsweg gleichmäßige Drosselung des abfließenden Hydraulikmittels, sondern eine entlang des Bremsweges zunehmende Drosselung vorgesehen wird, indem der in die Durchtrittsöffnung im Kopf bzw. Boden des Zylinders eingreifende, zylindrische Dämpfungskörper mit einer in Anschlagrichtung abfallenden Abflachung versehen wird, die mit der zylindrischen Durchtrittsöffnung einen sich entgegen der Anschlagrichtung verjüngenden Dämpfungsspalt bildet, der für die wegabhängige Drosselung des freien Strömungsquerschnittes zwischen dem Dämpfungskörper und der Durchtrittsöffnung sorgt. Um eine ausreichende Drosselwirkung unter Berücksichtigung der unvermeidbaren Herstellungstoleranzen sicherzustellen, muß der Dämpfungsspalt auf den Bereich einer Abflachung des Dämpfungskörpers beschränkt werden. Die durch die gewählte Neigung der Abflachung gegenüber der Kolbenachse erzielbare, über den Bremsweg des Kolbens stetig zunehmende Drosselwirkung auf den Hydraulikmittelabfluß kann das Bremsverhalten des Kolbens jedoch nur für einen bestimmten Belastungsfall vorteilhaft berücksichtigen. Eine Einstellung auf unterschiedliche Belastungsfälle und die damit verbundenen unterschiedlichen Abbremsbedingungen ist wegen des vorgegebenen Verlaufes des Dämpfungsspaltes zwischen der zylindrischen Durchtrittsbohrung und der geneigten Abflachung des in diese Durchtrittsöffnung eingreifenden Dämpfungskörpers nicht möglich.

Der Erfindung liegt somit die Aufgabe zugrunde, die Bremsverzögerungen des Kolbens in einfacher Weise an die jeweiligen Belastungsverhältnisse anpassen zu können, ohne hohe Druckschwingungen im anschlagseitigen Druckraum des Zylinders befürchten zu müssen.

Die Erfindung löst die gestellte Aufgabe dadurch, daß sich die Abflachung lediglich über einen Teil der Eingriffslänge des Dämpfungskörpers erstreckt und daß zwischen dem an den Boden bzw. den Kopf des Zylinders anschließenden Druckraum und der zugehörigen Zu- und Ableitung für das Hydraulikmittel in an sich bekannter Weise eine mit einem einstellbaren Drosselventil versehene Umgehungsleitung vorgesehen ist.

Durch die Parallelschaltung der wegunabhängigen Drosselung des Hydraulikabflusses über das Drosselventil und die wegabhängige Drosselung über den sich gegensinnig zur Anschlagrichtung verjüngenden Dämpfungsspalt zwischen dem Dämpfungskörper und der Durchtrittsöffnung im Kopf bzw. Boden des Zylinders können in überraschender Weise Druckschwingungen im anschlagseitigen Druckraum des Zylinders wirksam unterbunden werden, so daß zu Beginn der Drosselwirkung und der damit einsetzenden Abbremsung des Kolbens lediglich eine beschränkte Druckspitze auftritt, die mit der Geschwindigkeitsabnahme des Kolbens rasch abfällt, was vorteilhafte Konstruktionsbedingungen mit sich bringt. Trotz des Dämpfungsspaltes zwischen dem Dämpfungskörper und der Durchtrittsöffnung im Kopf bzw. Boden des Zylinders ist die Möglichkeit einer feinfühligen Einstellung der Bremswirkung über das Drosselventil in der Umgehungsleitung gegeben, weil sich die den Dämpfungsspalt bestimmende Abflachung des Dämpfungskörpers nur über einen Teil seiner Eingriffslänge erstreckt, so daß im Anschluß an die wegabhängige Drosselung ausschließlich die Drosselwirkung des Drosselventils für die Bremswirkung auf den Kolben wirksam bleibt, die somit entsprechend den angreifenden Massenkräften über das Drosselventil eingestellt werden kann. Erstreckt sich die Abflachung etwa über die Hälfte der Eingriffslänge des Dämpfungskörpers, so steht etwa der halbe Bremsweg für das alleine vom Drosselventil abhängige Bremsverhalten zur Verfügung, was eine ausreichende Anpassung an sehr unterschiedliche Massenkräfte erlaubt.

Um eine vorteilhafte Beaufschlagung des Kolbens aus der jeweiligen Endlage zu erreichen, sollte die Drosselung zwischen dem Dämpfungskörper und der Durchtrittsöffnung im Boden bzw. Kopf des Zylinders für das zuströmende Hydraulikmittel entsprechend überwunden werden. Zu diesem Zweck kann der Dämpfungskörper aus einer anschlagbegrenzt axial auf der Kolbenstange verschiebbaren Buchse bestehen, die als Steuerkolben für einen Strömungsweg wirksam wird, der die von der Buchse verschlossene Durchtrittsöffnung umgeht. Bei einer axialen Beaufschlagung der Buchse von der Seite der Zu- und Ableitung her hebt sie von ihrem Anschlag ab, an den sie beim Abbremsen des Kolbens dichtend angedrückt wird, womit ein Strömungsweg beispielsweise zwischen der Kolbenstange und der Buchse freigegeben wird. Anstelle einer auf der Kolbenstange geringfügig axial verschiebbar gelagerten Buchse kann ein mit der Kolbenstange verschiebefester Dämpfungskörper eingesetzt werden, der mit einem die Durchtrittsöffnung bildenden, anschlagbegrenzt axial verschiebbar im Zylinderboden bzw. -kopf gelagerten Dämpfungsring zusammenwirkt, dessen axiale Verschiebung in vergleichbarer Art zum Sperren und Freigeben eines Strömungsweges zur Umgehung der Durchtrittsöffnung ausgenützt werden kann.

In der Zeichnung ist der Erfindungsgegenstand beispielsweise dargestellt. Es zeigen
- Fig. 1: einen Hydraulikzylinder mit einer erfindungsgemäßen Vorrichtung zum Abbremsen des Kolbens in einem schematischen Längsschnitt,
- Fig. 2: diesen Zylinder mit dem Kolben im Bereich der kopfseitigen Endlage ausschnittsweise in einem Längsschnitt in einem größeren Maßstab,
- Fig. 3: den Zylinder mit dem Kolben im Bereich der bodenseitigen Endlage ausschnittsweise in einem größeren Maßstab,
- Fig. 4: einen als Buchse ausgebildeten Dämpfungskörper in einer Draufsicht,
- Fig. 5: einen Schnitt nach der Linie V-V der Fig. 4 und
- Fig. 6: den zeitlichen Verlauf der Geschwindigkeit, des Kolbenhubes und des Druckes im anschlagseitigen Druckraum des Zylinders in einem Schaubild.

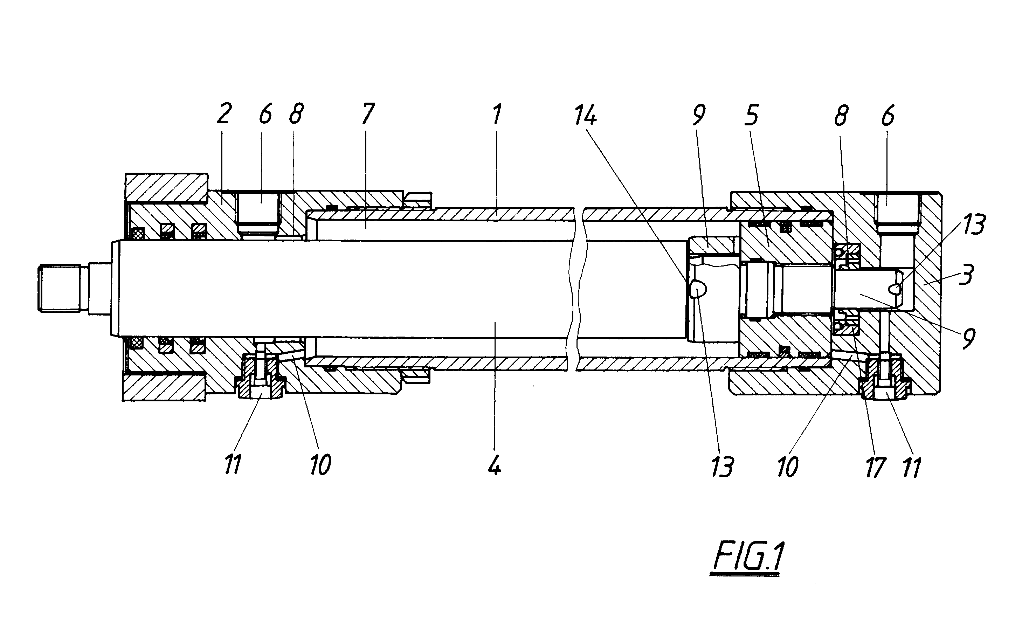

Wie insbesondere der Fig. 1 zu entnehmen ist, besteht der dargestellte Hydraulikzylinder aus einem Zylindermantel 1, auf den ein Kopf 2 und ein Boden 3 stirnseitig aufgeschraubt sind. Die den Kopf 2 flüssigkeitsdicht durchsetzende Kolbenstange 4 trägt einen aufgeschraubten Kolben 5, der in seinen beiden Endlagen am Kopf 2 bzw. am Boden 3 des Zylinders anschlägt. Die Zu- und Ablaufleitung 6 im Kopf 2 bzw. Boden 3 steht mit dem anschließenden Zylinderraum 7 über eine koaxiale Durchtrittsöffnung 8 in Verbindung, wobei diese Durchtrittsöffnungen 8 mit je einem der Kolbenstange 4 zugeordneten Dämpfungskörper 9 zusammenwirken, wenn diese Dämpfungskörper 9 im Bereich der kopf- bzw. bodenseitigen Endlage des Kolbens 5 in die Durchtrittsöffnungen 8 eingreifen und den Hydraulikmitteldurchtritt vom anschlagseitigen Druckraum 7 in die Zu- und Ablaufleitung 6 drosseln. Parallel zu der Durchtrittsöffnung 8 ist eine Umgehungsleitung 10 mit einem einstellbaren Drosselventil 11 zwischen dem kopf- und dem bodenseitigen Druckraum 7 einerseits und der Zu- und Ablaufleitung 6 des Kopfes 2 bzw. des Bodens 3 anderseits vorgesehen.

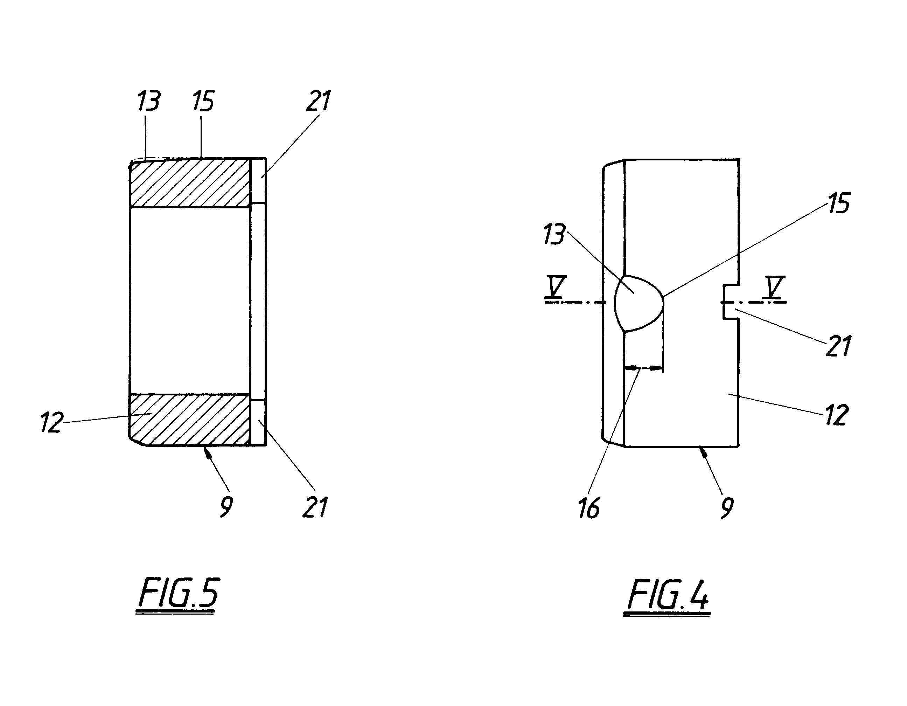

Der mit der kopfseitigen Durchtrittsöffnung 8 zusammenwirkende Dämpfungskörper 9 wird durch eine Buchse 12 gebildet, die in ihrem zylindrischen Teil eine gegen den Kopf 2 hin abfallende Abflachung 13 aufweist, wie dies insbesonderen den Fig. 4 und 5 entnommen werden kann. Zur Verdeutlichung dieser Abflachung 13, die mit der Achse der Buchse 12 einen Winkel von beispielsweise 2° einschließt, ist in der Fig. 5 der zylindrische Teil der Buchse 12 im Bereich der Abflachung 13 durch eine strichpunktierte Linie verlängert eingezeichnet.

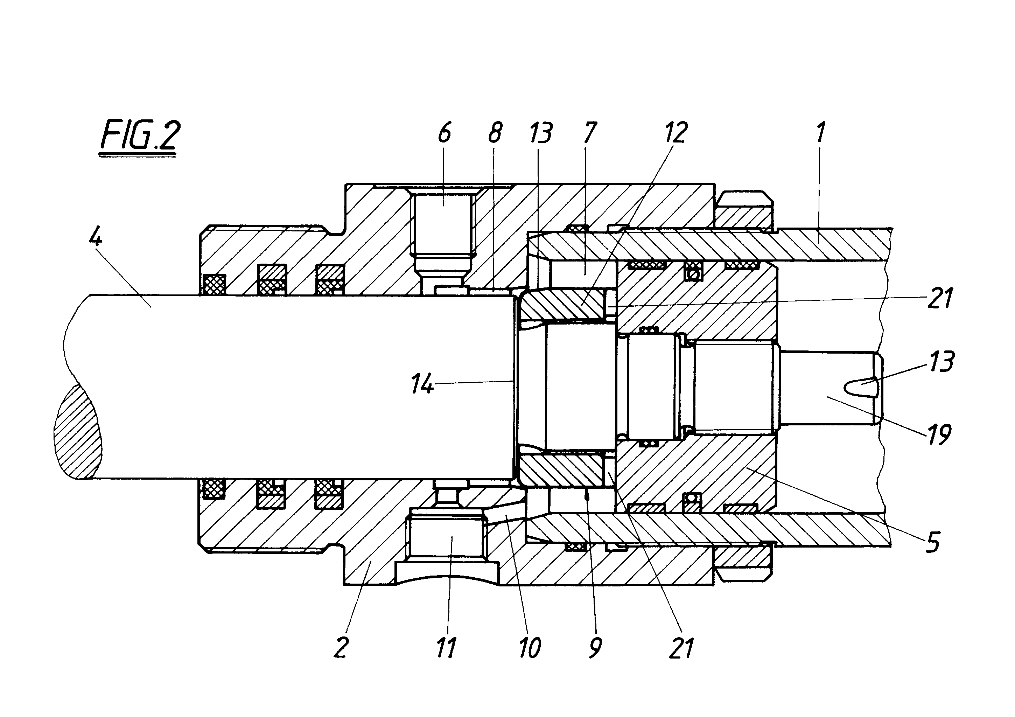

Wird der Kolben 5 von der Bodenseite her beaufschlagt und gegen den Kopf 2 des Zylinders vorgeschoben, so greift die zwischen dem Kolben 5 und einem Absatz 14 der Kolbenstange 4 axial festgelegte Buchse 12 des Dämpfungskörpers 9 in die Durchtrittsöffnung 8 des Kopfes 2 ein, wie dies in der Fig. 2 dargestellt ist. Mit dem Eintritt der Buchse 12 in die Durchtrittsöffnung 8 wird der freie Strömungsquerschnitt für das Hydraulikmittel in der Durchtrittsöffnung 8 gedrosselt, was mit einer entsprechenden Bremswirkung auf den Kolben 5 verbunden ist. Diese Drosselwirkung tritt jedoch nicht schlagartig beim Eingriff des zylindrischen Teils der Buchse 12 in den zylindrischen Teil der Durchtrittsöffnung 8 auf, sondern wird durch die Abflachung 13 gedämpft, die ja mit dem zylindrischen Teil der Durchtrittsöffnung 8 einen sich entgegen der Anschlagrichtung verjüngenden Dämpfungsspalt bildet, so daß die Drosselwirkung mit der Eingriffslänge der Buchse 12 in die Durchtrittsöffnung 8 zunimmt, bis das kolbenseitige Ende 15 der Abflachung 13 den zylindrischen Teil der Durchtrittsöffnung 8 erreicht. Da die axiale Länge 16 der Abflachung 13 etwa der halben Eingriffslänge der Buchse 12 in den zylindrischen Teil der Durchtrittsöffnung 8 und somit etwa dem halben Bremsweg des Kolbens 5 entspricht, bestimmt das Drosselventil 11 in der Umgehungsleitung 10 die hydraulische Bremswirkung auf dem Kolben für den verbleibenden Bremsweg bis zum Anschlag des Kolbens 5 am Kopf 2 alleine. Über das Drosselventil 11 kann daher die hydraulische Bremswirkung auf den Kolben 5 in Abhängigkeit von den jeweils anfallenden Massenkräften eingestellt werden, ohne die sonst mit dem Einsatz eines solchen Drosselventils verbundenen Nachteile hinsichtlich der im Druckraum 7 auftretenden Druckschwingungen in Kauf nehmen zu müssen. Da während eines ersten Bremsabschnittes das Drosselventil parallel zum Dämpfungsspalt zwischen der Abflachung 13 und der Durchtrittsöffnung 8 wirkt, werden über die wegabhängige Drosselung im Bereich der Abflachung 13 des Dämpfungskörpers 9 übermäßige Druckspitzen vermieden und Druckschwingungen gedämpft, so daß im kopfseitigen Druckraum 7 nach einem anfänglichen Anstieg des Druckes mit einem raschen Druckabbau gerechnet werden kann.

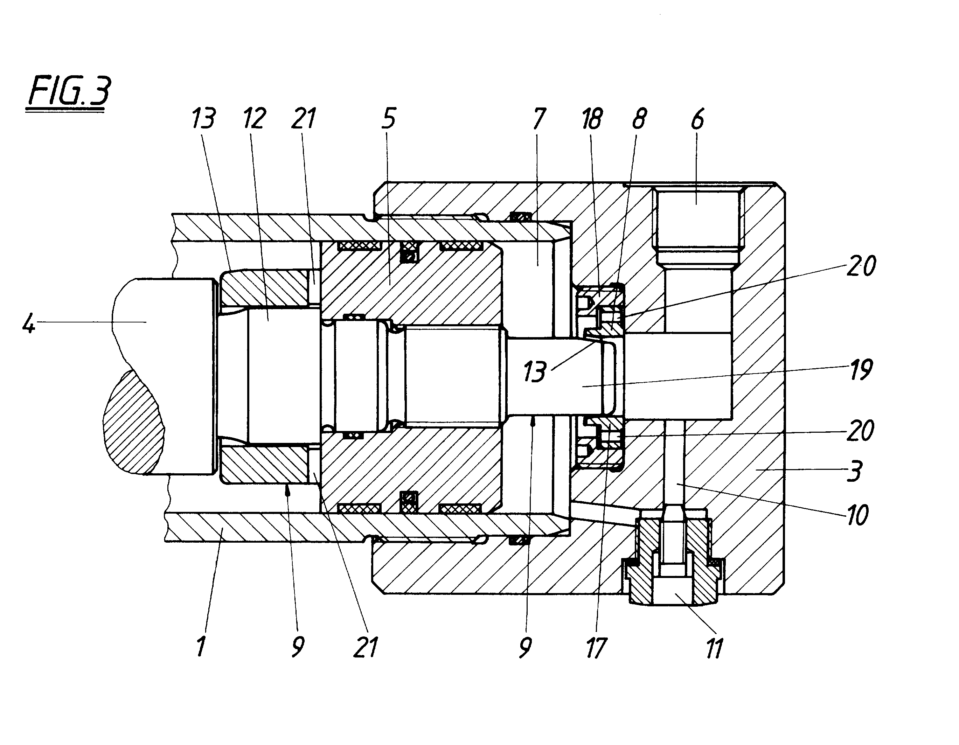

Wie die Fig. 3 zeigt, ist auch im Bereich des Bodens 3 eine ähnlich wirkende Dämpfung für den Kolben 5 vorgesehen. Zum Unterschied zum Kopf 2 wird die Durchtrittsöffnung 8 nicht durch eine Bohrung im Boden 3 selbst, sondern durch einen Dämpfungsring 17 gebildet, der in den Boden 3 eingesetzt ist und durch eine eingeschraubte Ringhalterung 18 gehalten wird. Der Dämpfungskörper 9 besteht aus einem axialen Ansatz 19 der Kolbenstange 4, der wiederum mit einer gegen die Anschlagseite hin abfallenden Abflachung 13 versehen ist, die sich über etwa die halbe Eingriffslänge des Ansatzes 19 im Dämpfungsring 17 erstreckt. Da sich zwischen dem zylindrischen Teil der Durchtrittsöffnung 8 des Dämpfungsringes 7 und der Abflachung 13 des Ansatzes 19 ein sich entgegen der Anschlagrichtung verjüngender Dämpfungsspalt zwischen dem anschlagseitigen Druckraum 7 und der Zu- und Ablaufleitung 6 des Bodens 3 ergibt, erfolgt die hydraulische Abbremsung des Kolbens 5 zunächst wiederum durch die parallel geschalteten Drosselwirkungen einerseits des Drosselventils 11 und anderseits des Dämpfungsspaltes im Bereich der Abflachung 13 des Dämpfungskörpers 9, bis nach dem Durchlaufen des Dämpfungsspaltes das Drosselventil 11 alleine zur Wirkung kommt.

Um bei einer Druckbeaufschlagung des Kolbens 5 über die Zu- und Ablaufleitung 6 im Boden 3 des Hydraulikzylinders ein Abheben des Kolbens 5 vom Boden 3 zu erleichtern, ist der Dämpfungsring 17 mit axialem Spiel gelagert, so daß er bei einer Kolbenbeaufschlagung über den bodenseitigen Zulauf von der dichtenden Anlage am Boden 3 weggedrückt werden kann, um einen Strömungsweg für das Hydraulikmittel über axiale Durchtrittsbohrungen 20 des Dämpfungsringes 17 zur Umgehung der noch durch den Dämpfungskörper 9 verschlossenen Durchtrittsöffnung 8 freizugeben. In ähnlicher Weise kann die Buchse 12 des kopfseitigen Dämpfungskörpers 9 als Steuerkolben mit axialem Spiel auf der Kolbenstange 4 gehalten sein, um bei der Beaufschlagung des Kolbens 5 aus der kopfseitigen Endlage einen zusätzlichen Strömungsweg zwischen der Buchse 12 und der Kolbenstange 4 zu eröffnen. Zu diesem Zweck ist die Buchse 12 mit radialem Spiel auf der Kolbenstange 4 zu lagern und für eine radiale Durchtrittsmöglichkeit des Hydraulikmittels durch die Buchse 12 im Bereich des Kolbens 5 zu sorgen, was durch entsprechende stirnseitige Ausnehmungen 21 erreicht wird. Die nicht spielfreie Lagerung der Buchse 12 auf der Kolbenstange 4 ist für die Drosselwirkung unerheblich, weil die Buchse 12 über den Druck im Druckraum 7 dichtend an den Absatz 14 angedrückt wird und sich über einen Anlaufkonus in der Durchtrittsöffnung 8 selbständig zentriert.

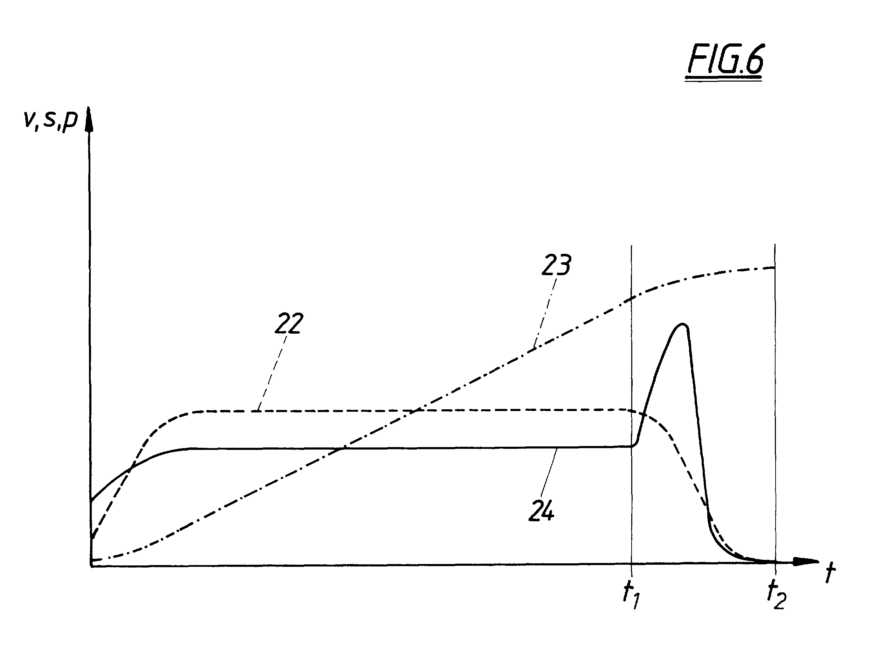

Anhand der Fig. 6 kann die Wirkung der erfindungsgemäßen Maßnahmen näher erläutert werden. Im dargestellten Koordianatensystem ist auf der Abszisse die Zeit t für einen Kolbenhub aufgetragen. Die Ordinate gibt die Achse v für die strichliert dargestellte Kolbengeschwindigkeit 22, die Achse s für den Kolbenhub 23, der strichpunktiert dargestellt ist, und die Achse p für den Druckverlauf 24 im anschlagseitigen Druckraum 7 des Zylinders schematisch an. Es zeigt sich, daß nach einer Anfangsbeschleunigung der Kolben mit einer konstanten Geschwindigkeit gegen die Anschlagseite bewegt wird. Dem zur Abszisse parallelen Geschwindigkeitsverlauf 22 entspricht ein linearer Anstieg des Hubverlaufes 23, der den vom Kolben zurückgelegten Weg wiedergibt. Dementsprechend herrschen im anschlagseitigen Druckraum angenähert konstante Druckverhältnisse, weil sich an den Strömungsverhältnissen im Bereich der Durchtrittsöffnung 8 solange nichts ändert, bis der Dämpfungskörper 9 zum Zeitpunkt t₁ in den Bereich der Durchtrittsöffnung 8 gelangt. Die zunehmende Drosselwirkung läßt die Druckkurve 24 zunächst stark ansteigen, was mit einer entsprechenden Abbremsung des Kolbens verbunden ist, wie dies dem Geschwindigkeitsverlauf 22 entnommen werden kann. Mit der sinkenden Kolbengeschwindigkeit fällt auch der Hydraulikdruck im Druckraum 7 ab, was im Zusammenhang mit dem über den gesamten Bremsweg konstant bleibenden Strömungsquerschnitts der Umgehungsleitung 10 über das Drosselventil 11 zu sehen ist, so daß sich aufgrund der aufeinander abgestimmten Wirkungen der wegabhängigen, auf einen ersten Bremsabschnitt beschränkten Drosselwirkung und der durch das Drosselventil 11 eingestellten, über den gesamten Bremsabschnitt gleichbleibenden, wegunabhängigen Drosselwirkung ein vorteilhaftes Abbremsen des Kolbens während der Bremszeit von t₁ bis zum Kolbenanschlag zum Zeitpunkt t₂ ergibt.

## Patentansprüche

1. Vorrichtung zum Abbremsen eines Kolbens (5) eines Hydraulikzylinders in seiner Endlage, bestehend aus einer zur Kolbenstange (4) koaxialen, den Druckraum zwischen dem Kolben (5) und dem Boden (3) bzw. dem Kopf (2) des Zylinders mit einer Zu- und Ableitung (6) für das Hydraulikmittel verbindenden, zylindrischen Durchtrittsöffnung (8) im Kopf bzw. Boden des Zylinders und aus einem der Kolbenstange zugeordneten, zylindrischen Dämpfungskörper, der in der anschlagbegrenzten Endlage des Kolbens in einer dem Bremsweg entsprechenden Länge in die Durchtrittsöffnung (8) im Kopf (2) bzw. Boden (3) des Zylinders eingreift und eine in Anschlagrichtung abfallende Abflachung (13) aufweist, die mit der Durchtrittsöffnung (8) einen sich entgegen der Anschlagrichtung verjüngenden Dämpfungsspalt bildet, dadurch gekennzeichnet, daß sich die Abflachung (13) lediglich über einen Teil der Eingriffslänge des Dämpfungskörpers (9) erstreckt und daß zwischen dem an den Boden (3) bzw. den Kopf (2) des Zylinders anschließenden Druckraum (7) und der zugehörigen Zu- und Ableitung (6) für das Hydraulikmittel in an sich bekannter Weise eine mit einem einstellbaren Drosselventil (11) versehene Umgehungsleitung (10) vorgesehen ist.

2. Vorrichtung nach Anspruch 1, dadurch gekennzeichnet, daß sich die Abflachung (13) etwa über die Hälfte der Eingriffslänge des Dämpfungskörpers (9) erstreckt.

3. Vorrichtung nach Anspruch 1 oder 2, dadurch gekennzeichnet, daß der Dämpfungskörper (9) aus einer anschlagbegrenzt axial auf der Kolbenstange (4) verschiebbaren Buchse (12) oder aus einem verschiebefesten Teil der Kolbenstange (4) besteht, der mit einem die Durchtrittsöffnung (8) bildenden, anschlagbegrenzt axial verschiebbar im Zylinderboden (3) bzw. -kopf (2) gelagerten Dämpfungsring (17) zusammenwirkt, und daß die Buchse (12) oder der Dämpfungsring (17) einen Steuerkolben für einen Strömungsweg bildet, der die vom Dämpfungskörper (9) verschlossene Durchtrittsöffnung (8) umgeht.
